Europäisches Patentamt

European Patent Office

Office européen des brevets

(11) Publication number: 0 181 406
A1

## EUROPEAN PATENT APPLICATION

published in accordance with Art. 158(3) EPC

(21) Application number: 85902159.4

(22) Date of filing: 09.05.85

Data of the international application taken as a basis:

(86) International application number:
PCT/JP85/00256

(87) International publication number:
WO85/05197 (21.11.85 85/25)

(51) Int. Cl.⁴: G 05 B 19/403

(30) Priority: 09.05.84 JP 92675/84

(43) Date of publication of application:
21.05.86 Bulletin 86/21

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: KISHI, Hajimu
Hino Hirayamadai Jutaku 1104
6-7-8 Asahigaoka, Hino-shi Tokyo 191(JP)

(72) Inventor: TANAKA, Kunio
5-8-13, Tamakawa-cho
Akishima-shi Tokyo 196(JP)

(74) Representative: Billington, Lawrence Emlyn et al,
Haseltine Lake & Co. 9 Park Square
Leeds LS1 2LH(GB)

(54) METHOD OF CONTROLLING ROBOT.

(57) A method of controlling robot wherein a first group of data which includes a plurality of position data (P1, P2, P3, P4) expressed by a work coordinate system to define the position of the robot (TL) is input independently of a second group of data which includes instructions (LOAD, UNLOAD) to instruct the robot in such operations as attaching and detaching works, and instructions to specify predetermined position data. The robot executes a predetermined operation in accordance with instructions contained in the second group of data. Further, the position data specified by the position data instruction contained in the second group of data is subjected to coordinate conversion depending upon the robot to be controlled, and the position of robot is controlled relying upon the position data of the robot coordinate system obtained through coordinate conversion.

FIG. 3

DESCRIPTION

ROBOT CONTROL METHOD

Technical Field

This invention relates to a robot control method and, more particularly, to a robot control method for inputting first data including a plurality of robot position data expressed in a workpiece coordinate system and second data including an instruction designating a robot activity and an instruction designating a predetermined item of the position data, and for controlling a robot on the basis of the first and second data.

Background Art

A robot is positionally controlled on the basis of robot control data stored beforehand in a robot control unit and executes loading and unloading of workpieces, mounting and demounting of tools and other services at predetermined positions.

Conventionally, robot control data consist of data designating robot activities at various points and position data for moving the robot to predetermined positions, these data being created as a whole.

When activity data and position data are thus created as a whole, however, all of the robot control data must be created anew even if the only change to be made is, say, workpiece size or the tool to be mounted or demounted, regardless of the fact that no change is required in the activity itself. Making such a modification is a troublesome task.

Furthermore, the tendency recently has been to create robot control data off-line. However, with the conventional method in which the robot activity data and robot position data are created as a whole, the robot activity data must be taken into consideration at the time of programming. In other words, programming cannot be carried out by taking solely the position data into consideration and, hence, the programming operation is a complicated one.

An object of the present invention is to provide a robot control method whereby robot activity data and robot position data can be created and entered separately.

Another object of the present invention is to provide a robot control method in which only robot position data need be modified even if robot control data are to be corrected by modifying a workpiece, tool or the like, provided that the contents of the robot activity and the robot operating path pattern do not require modification.

Still another object of the present invention is to provide a robot control method whereby robot position data can be created without taking the contents of a robot activity into consideration and, moreover, whereby a robot can be controlled by combining the created robot position data with robot activity data entered separately.

A further object of the present invention is to provide a robot control method whereby position data created in ordinary form can be transformed into coordinates in a robot coordinate system depending upon the robot under control, irrespective of the type of robot (cylindrical coordinate-type robot, articulated robot, cartesian coordinate-type robot), and whereby the robot can be controlled upon combining the position data obtained by the coordinate transformation and the robot activity data.

## Disclosure of the Invention

The robot control method of the present invention includes separately inputting first data including a plurality of position data expressed in a workpiece coordinate system for prescribing robot position and second data including instructions designating contents of a robot activity and instructions designating predetermined items of the position data, causing the robot to execute a predetermined activity in response to the instructions contained in the second data designating the contents of an activity, applying coordinate transformation processing conforming to the robot under control to the position data designated by the position data designating instruction contained in the second data, and controlling the position of the robot on the basis of position data in the robot coordinate system obtained by the coordinate transformation processing. According to the present

0181406

invention, correction of the robot control data and creation of the robot control data can be performed in a simple manner.

Brief Description of the Drawings

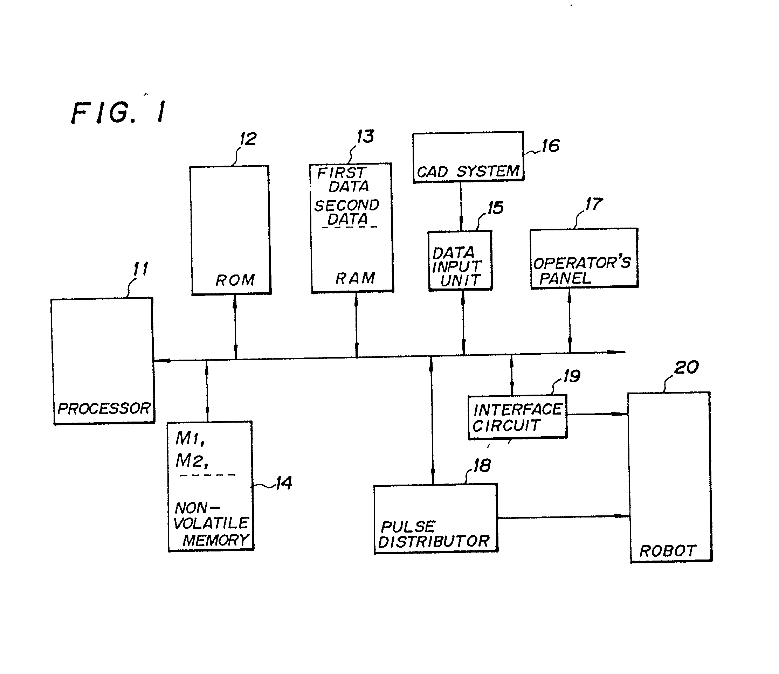

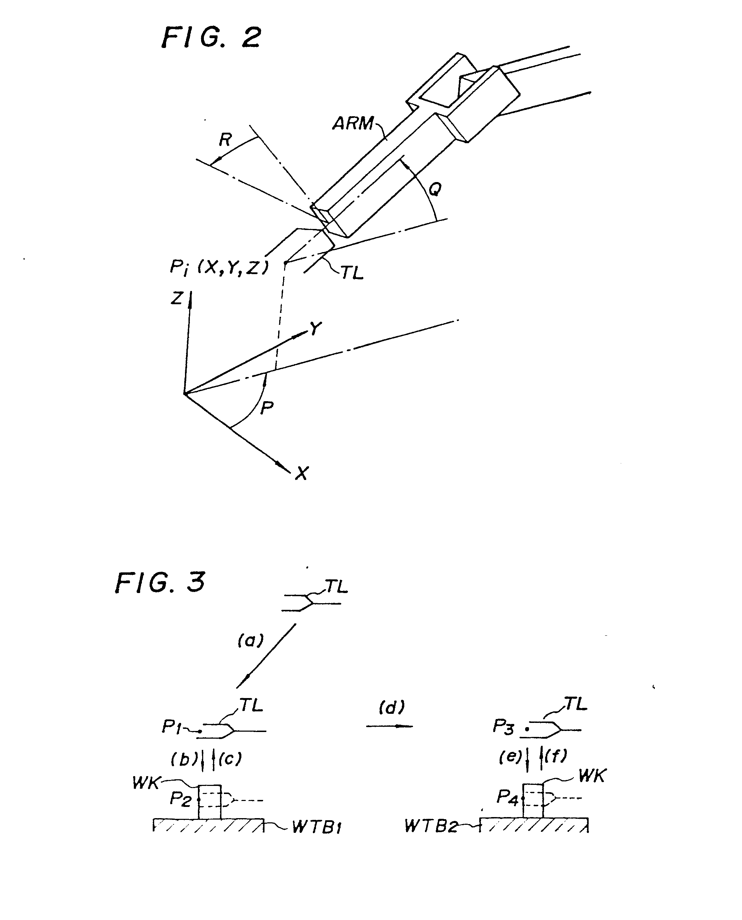

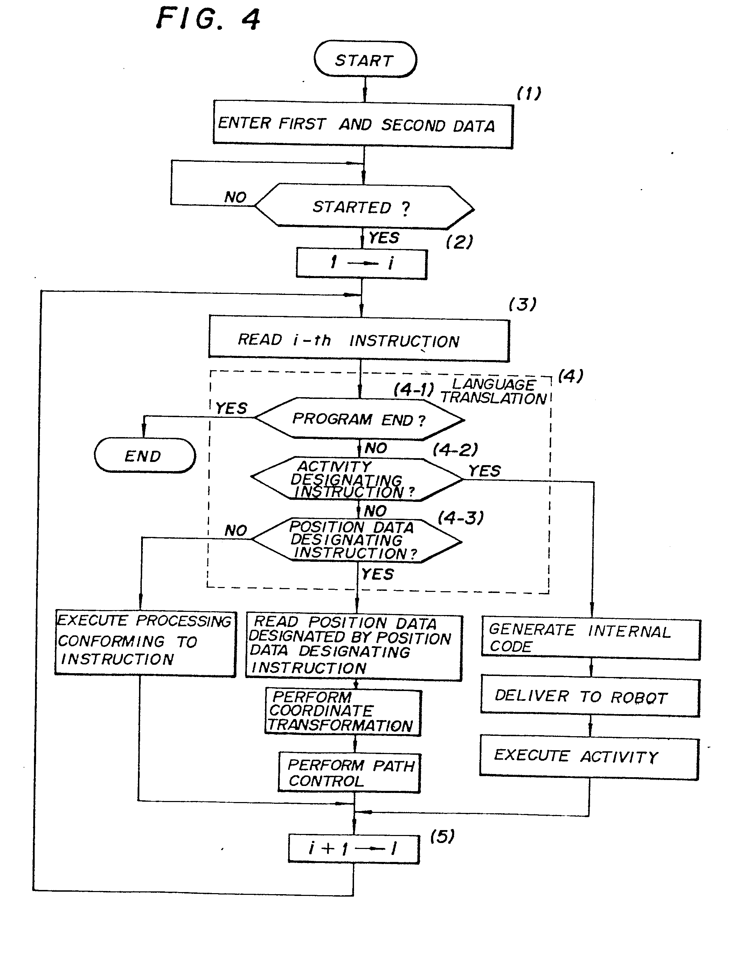

Fig. 1 is a block diagram of a system for practicing the robot control method according to the present invention, Fig. 2 is a view for describing the axial configuration of position data, Fig. 3 is a view for describing second data including instructions designating the contents of activities, and Fig. 4 is a flowchart of processing according to the present invention.

Best Mode for Carrying Out the Invention

Fig. 1 is a block diagram of a system for practicing the robot control method according to the present invention, and Fig. 2 is a view for describing the axial configuration of position data.

In Fig. 1, numeral 11 denotes a processor, 12 a ROM storing a control program, and 13 a RAM for storing a plurality of robot position data (first data) created in one or more workpiece coordinate systems, and second data including an instruction designating the contents of an activity and an instruction designating position data contained in the first data. Numeral 14 denotes a non-volatile memory storing a matrix, which is for transforming position data expressed in the workpiece coordinate system into position data in a robot coordinate system, as well as parameters. Numeral 15 denotes a data input unit for inputting the first data, which is created by a CAD system 16 under off-line control, as well as the second data. Numeral 17 denotes an operator's panel, 18 a pulse distributor, and 19 an interface circuit for supervising an exchange of data between the processor 11 and a robot 20.

With reference to Fig. 2, each item of position data contained in the first data is specified by the position (X,Y,Z), in a workpiece coordinate system, of the distal end of a tool T mounted on an arm ARM, and by tool rotation angles (P,Q,R). The meaning of P, Q and R in the workpiece coordinate system is as follows. Starting at a position where the axial vector (the one-dot chain line in Fig. 1) of the tool TL coincides with the X axis, the vector is rotated counter-clockwise by P degrees in the XY plane and then is rotated at this position by Q degrees in a plane perpendicular to the XY plane. This indicates the axial direction of the tool TL at the coordinates (X,Y,Z). A designated angle of rotation about this axis is R. Each item of position data Pi (i=1, 2,...) is created and inputted in the above-mentioned coordinate system by the CAD system 16 irrespective of the type of robot, or in other words, commonly for all robots. Thereafter, coordinate transformation processing conforming to the robot under control is executed.

Let us assume that the second data are for grasping a workpiece WK, which has been placed on a worktable WTB1 shown in Fig. 3, by means of the tool TL, and setting the workpiece on a different worktable WTB2. In such case, the second data will be as shown below, where the tool TL is moved in the order (a) ⟶ (b) ⟶ (c) ⟶ (d) ⟶ (e) ⟶ (f) in Fig. 3:

```
SPEED 3;
MAT/M1;
RPD, P1;              ... (a)
LOAD, P2;            ... (b)
P1;                  ... (c)
MAT/END;
MAT/M2;
RPD, P3;             ... (d)
UNLOAD, P4;          ... (e)
P3;                  ... (f)
MAT/END;
. . . . . . . . . . . .
PEND;
```

In the second data, "SPEED" is an instruction specifying feedrate, "MAT/M1" and "MAT/M2" are coordinate transformation instructions designating that coordinate transformation processing is to be executed based on a specified matrix (M1 or M2) which follows the slash mark "/", "MAT/END" is an instruction for clearing the matrix which has so far been employed, "RPD" is a rapid-traverse instruction, "Pi" (i=1, 2,...) is a position data designating instruction for designating a prescribed item of position data among plural items of position data specified by the first data, and "LOAD", "UNLOAD" are activity designating instructions for designating workpiece loading and unloading, namely the contents of an activity.

The robot control method of the present invention will now be described with reference to the processing flowchart of Fig. 4.

(1) First data P1, P2 ... specifying tool (robot) positions and created by the CAD system 16, and second data comprising instructions designating the contents of robot activities as well as position data contained in the first data, are inputted from the data input unit 15 and stored in the RAM 13. It should be noted that a transformation matrix is stored in the non-volatile memory 14 in advance. The transformation matrix is for transforming the position data, which are expressed in the workpiece coordinate system, into position data in the robot coordinate system.

(2) If a start button, not shown, on the operator's panel 17 is now pressed, the processor 11 performs the operation

$$1 \longrightarrow i$$

(3) Next, the processor 11 reads an i-th instruction of the second data out of the RAM 13.

(4) Thereafter, the processor 11 subjects the instruction to language translation.

(4-1) If the result of the language translation is that the i-th instruction indicates the end of the program, processing is terminated.

(4-2)  If the result of the language translation is that the i-th instruction is an activity designating instruction, the instruction is converted into an internal code (service code) received by the robot and the internal code is fed into the robot 20 via the interface circuit 19.  When the robot 20 executes the activity on the basis of the commanded internal code and completes the commanded activity, it feeds an activity end signal into the interface circuit 19.

(4-3)  If the result of the language translation is that the i-th instruction is a position data designating instruction Pi, then the processor 11 goes to the RAM 13 to read out position data designated by the position data designating instructions (P1, P2 ...) using the transformation matrix already designated by the coordinate transformation instruction "MAT".  The processor subjects the position data read out of the RAM to coordinate transformation processing.  We will assume that the position data are stored in the RAM 13 in correspondence with the position data designating instructions P1, P2 ... and so on.  Position data in the workpiece coordinate system expressed by a general formula are converted into position data in the robot coordinate system by this coordinate transformation processing.

When the position data in the robot coordinate system have been obtained, the processor 11 uses the position data to perform well-known path control processing, thereby calculating movement data along each axis, these data then being fed into the pulse distributor 18. As a result, the pulse distributor 18 executes a pulse distribution calculation to generate distributed pulses along each axis. Each control axis of the robot is controlled by the distributed pulses to move the robot along the commanded path.

If the result of the language translation is that the i-th instruction is not any of the instructions mentioned in (4-1) through (4-3), prescribed processing conforming to the instruction is executed. For example, if the i-th instruction is the coordinate transformation instruction "MAT", predetermined processing is performed so as to execute the coordinate transformation using the matrix indicated following the slash mark "/".

(5) When processing based on the i-th instruction ends, the processor 11 updates i by the operation i + 1 $\longrightarrow$ i and thereafter repeats the foregoing processing until the program end instruction is read.

The second data are converted by the language translation into the NC language, shown below, after which the above-described processing is executed. Let the axes in the robot coordinate system be T, W, U, B, C, A.

| NC Language | Second Data |
|---|---|
| G68; | ...... MAT/M1; |
| G00T_W_U_B_C_A; | ...... RPD,P1; |
| G01T_W_U_B_C_A_F3; | ...... LOAD, P2; |
| S60, 10; | |
| S70; | |
| G01T_W_U_B_C_A_F3; | ...... P1; |
| G69; | ...... MAT/END; |
| G68; | ...... MAT/M2; |
| G00T_W_U_B_C_A; | ...... RPD,P3; |
| G01T_W_U_B_C_A_F3; | ...... UNLOAD, P4; |
| S60, 10 | |
| S71 | |
| G01T_W_U_B_C_A_F3; | ...... P3; |
| G69; | ...... MAT/END |

..................................................

In the NC language, the letter of the alphabet "S" represents a word address indicative of a service code, "S60" means to wait for a period of time specified by the numerical value which follows, "S70" means to close the hand, and "S71" means to open the hand.

According to the present invention as described above, it is so arranged as to separately enter position data (first data) specifying plural positions of a robot in the workpiece coordinate system, and second data containing instructions designating the contents of robot activity and instructions designating position data contained in the first data. As a

result, the creation of robot control data is simplified. Since use can be made of position data expressed by a general formula using a CAD system, the creation of the robot control data is simplifed to an even greater extent.

In addition, since it is possible to modify solely position data without modifying the contents of an activity, it is easy to deal with a change in workpiece size or a change in the tool to be loaded or unloaded. Accordingly, correction of robot control data can be performed in a simple manner.

-12- 0181406

CLAIMS:

1. A robot control method characterized by separately inputting first data including a plurality of position data expressed in a workpiece coordinate system in order to prescribe robot position and second data including instructions designating contents of a robot activity and instructions designating predetermined items of said position data, causing the robot to execute a predetermined activity in response to the instructions contained in the second data designating the contents of an activity, applying coordinate transformation processing to the position data designated by a position data designating instruction contained in the second data, and controlling the position of the robot on the basis of position data in a robot coordinate system obtained by the coordinate transformation processing.

2. A robot control method according to claim 1, characterized by incorporating data specifying a coordinate transformation matrix in said second data, and applying the coordinate transformation processing to the position data by using said specified matrix.

3. The robot control method acording to claim 1 or 2, characterized by creating and inputting off-line the position data in said workpiece coordinate system.

# FIG. 1

## FIG. 2

## FIG. 3

## FIG. 4

START

(1) ENTER FIRST AND SECOND DATA

NO ← STARTED ?

YES (2)

$1 \longrightarrow i$

(3) READ i-th INSTRUCTION

LANGUAGE TRANSLATION (4)

(4-1) YES ← PROGRAM END ?

END

NO (4-2)

ACTIVITY DESIGNATING INSTRUCTION ? → YES

NO (4-3)

NO ← POSITION DATA DESIGNATING INSTRUCTION ?

YES

EXECUTE PROCESSING CONFORMING TO INSTRUCTION

READ POSITION DATA DESIGNATED BY POSITION DATA DESIGNATING INSTRUCTION

GENERATE INTERNAL CODE

PERFORM COORDINATE TRANSFORMATION

DELIVER TO ROBOT

PERFORM PATH CONTROL

EXECUTE ACTIVITY

$i + 1 \longrightarrow I$ (5)

**0181406**

# INTERNATIONAL SEARCH REPORT

International Application No  PCT/JP85/00256

## I. CLASSIFICATION OF SUBJECT MATTER (if several classification symbols apply, indicate all) [3]

According to International Patent Classification (IPC) or to both National Classification and IPC

Int. Cl$^4$ G05B 19/403

## II. FIELDS SEARCHED

| Minimum Documentation Searched [4] | |
|---|---|
| Classification System | Classification Symbols |
| IPC | G05B 19/18 – 19/42 |

| Documentation Searched other than Minimum Documentation to the Extent that such Documents are Included in the Fields Searched [5] |
|---|
| Jitsuyo Shinan Koho          1926 – 1985 |
| Kokai Jitsuyo Shinan Koho    1971 – 1985 |

## III. DOCUMENTS CONSIDERED TO BE RELEVANT [14]

| Category [*] | Citation of Document, [16] with indication, where appropriate, of the relevant passages [17] | Relevant to Claim No [18] |
|---|---|---|
| X,Y | JP, A, 58-100972 (Komatsu Ltd.), 15 June 1983 (15. 06. 83) Column 7, line 10 to column 8, line 8 (Family : none) | 1 – 3 |
| Y | NC Handbook Henshu Iinkai-hen, "NC Handbook" Syohan, 25 May 1972 (25. 05. 72) Nikkan Kogyo Shinbunsha p.131-135 | 2, 3 |
| Y | JP, A, 48-13784 (Shin Meiwa Industry Co., Ltd.), 21 February 1973 (21. 02. 73) Column 6, lines 29 to 34 (Family : none) | 3 |

* Special categories of cited documents: [15]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance, the claimed invention cannot be considered novel or cannot be considered to involve an inventive step
"Y" document of particular relevance, the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search [2] | Date of Mailing of this International Search Report [2] |
|---|---|
| July 24, 1985 (24. 07. 85) | August 5, 1985 (05. 08. 85) |
| International Searching Authority [1] | Signature of Authorized Officer [20] |
| Japanese Patent Office | |

Form PCT/ISA/210 (second sheet) (October 1951)